Europäisches Patentamt

European Patent Office

Office européen des brevets

(19)

(11) Veröffentlichungsnummer: **0 013 350**
**B1**

(12) **EUROPÄISCHE PATENTSCHRIFT**

(45) Veröffentlichungstag der Patentschrift: **15.12.82**

(51) Int. Cl.³: **C 08 J 11/04, C 08 L 75/04**

(21) Anmeldenummer: **79104930.7**

(22) Anmeldetag: **05.12.79**

(54) Verfahren zur Auftrennung von Polyurethanhydrolysaten in Polyol und Polyamin.

(30) Priorität: **20.12.78 DE 2854940**

(43) Veröffentlichungstag der Anmeldung:
**23.07.80 Patentblatt 80/15**

(45) Bekanntmachung des Hinweises auf die Patenterteilung:
**15.12.82 Patentblatt 82/50**

(84) Benannte Vertragsstaaten:
**BE DE FR GB IT NL**

(56) Entgegenhaltungen:
**DE - B - 2 207 379**
**US - A - 4 035 314**

(73) Patentinhaber: **BAYER AG**
**Zentralbereich Patente, Marken und Lizenzen**
**D-5090 Leverkusen 1, Bayerwerk (DE)**

(72) Erfinder: **Niederdellmann, Georg, Dr.**
**Heinestrasse 6**
**D-4047 Dormagen 4 (DE)**
Erfinder: **Roemer, Norbert, Ing.grad.**
**Hamerweg 128**
**D-4050 Mönchengladbach (DE)**
Erfinder: **Grigat, Ernst, Prof. Dr.**
**Ackerstrasse 21**
**D-5068 Odenthal (DE)**

Courier Press, Leamington Spa, England.

Verfahren zur Auftrennung von Polyurethanhydrolysaten in Polyol und Polyamin

Es sind eine Reihe von Verfahren bekannt, durch hydrolytischen Abbau Polyurethanschaumstoff-Abfälle zu einem Gemisch aus dem Ausgangspolyol und jenem Diamin zu spalten, welches dem bei der Schaumstoffherstellung verwendeten Diisocyanat zugrunde liegt (siehe z.B. DE—A 24 42 387). Vor einer erneuten Verwendung im Produktionsprozeß muß dieses Hydrolysatgemisch in die Polyol- und die Diaminkomponente zerlegt werden.

Ein technisch sinnvolles Trennverfahren soll wirt-shaftlich arbeiten, keine hohen Investitionskosten erfordern und die isolierten Rohstoffe in einer möglichst direkt, d.h. ohne aufwendigen Reinigungsprozeß wiederverwendbaren Form liefern. Dies gilt bei den gegen Störeinflüsse wie z.B. Verunreinigungen sehr empfindlichen, diffizilen Rezepturen für Polyurethan-Weichschaumstoffe in besonderem Maße für die Qualität der aus Hydrolysaten wiedergewonnenen Polyätherpolyole, die wieder im Verschäumungsprozeß eingesetzt werden sollen.

Für die Auftrennung des Hydrolysatgemisches werden bisher im wesentlichen Destillations' und Flüssigkeitsextraktionsverfahren in verschiedenen Modifizierungen angewandt. Das Destillationsverfahren liefert mit guter Ausbeute und hoher Reinheit die Diaminkomponente zurück, der als Destillationsrückstand anfallende Polyäther ist jedoch in der vorliegenden Form für einen direkte Wiederverschäumung unbrauchbar (Environmental Science and Technology, Vol. 8, Nr. 2, Febr. 1974, Seite 138).

Beim Flüssigextraktionsverfahren, wie es z.B. die DE—B 2 207 379 beschreibt, nimmt man das Hydrolysat in Toluol oder einem anderen organischen Lösungsmittel auf und extrahiert das Diamin mit verdünnter, wäßriger Salzsäure. Die begrenzte Löslichkeit des Diaminhydrochlorids erfordert ein beträchtliches Volumen an verdünnter Säure, welches aus dem Extrakt wieder destillativ entfernt werden muß. Hinzu kommt, daß die bei der Schaumstoffherstellung mitverwendeten Stabilisatoren und Emulgatoren die Trennung der organischen und wäßrigen Phase sehr erschweren.

Die US—Patentschrift 4 035 314 beschreibt die Wiedergewinnung von Polyurethanrohstoffen durch Hydrolyse von Kunststoffmaterialien aus Automobilschrott. Dabei wird, nachdem das im wesentlichen aus Polyäther un Diamin bestehende Polyurethanhydrolysate mit Hilfe eines organischen Lösungsmittels von den nicht hydrolysierbaren Kunststoffen abgetrennt wurde, solange Chlorwasserstoffgas in die Hydrolysatlösung eingeleitet, bis kein Aminhydrochlorid mehr ausfällt. Nach Abfiltrieren des Aminhydrochlorids sowie Abdestillieren des Lösungsmittels und des überschüssigen Chlorwasserstoffs erhält man einen Regeneratpolyäther. Dieser wird mit Toluylendiisocyanat zu einem Präpolymer umgesetzt, welches, vermischt mit reinem Präpolymer, mit 4,4'-Methylendianilin zu einem Elastomeren ausgehärtet werden kann. Für die Schaumstoffherstellung sind derart gewonnene Regeneratpolyäther jedoch unbrauchbar, da sie selbst bei Anwendung eines deutlichen Chlorwasserstoff-Überschusses zu hohe Restamingehalte aufweisen.

Überraschend wurde nun gefunden, daß man in einfacher Weise zu einem einwandfrei verschäumbaren, praktisch aminfreien Regeneratpolyäther gelangt, wenn man die Aminhydrochloridfällung fraktioniert, d.h. in mehreren Teilschritten durchführt, wobei jeweils das ausgefällte Aminsalz vor der weiteren Chlorwasserttoffeinleitung von der Hydrolysatlösung abgetrennt wird.

Gegenstand der vorliegenden Erfindung ist somit ein Verfahren zur Auftrennung von Polyurethan-Hydrolysaten in für die Herstellung von Polyurethankunststoffen, insbesondere Polyurethanschaumstoffen, wiederverwendbare Polyole bzw. Polyamine durch Einleitung von Chlorwasserstoffgas in das gegebenenfalls mit inerten Lösungsmitteln verdünnte Hydrolysatgemisch und Abfiltrieren des ausgefällten Aminsalzes, welches dadurch gekennzeichnet, ist, daß man

a) gegebenenfalls in das Hydrolysat zunächst pro Aminäquivalent 0,02 bis 0,07 Mol, vorzugsweise ca. 0,05 Mol, an Chlorwasserstoff einleitet, filtriert und den Filterrückstand verwirft, danach

b) in das Filtrat pro noch vorhandenem Aminäquivalent 0,20 bis 0,47 Mol, vorzugsweise 0,30 bis 0,45 Mol, Chlorwasserstoff einleitet, das ausgefällte Aminsalz abfiltriert, dann

c) den Schritt (b) ein- oder mehrmals wiederholt, bis der Amingruppengehalt im Filtrat unter 1 Gew.-% (bezogen auf lösungsmittelfreies Filtrat), vorzugsweise unter 0,5 Gew.-% besonders bevorzugt unter 0,25 Gew.-%, liegt, und schließlich

d) die Fällung des Amins durch Einleiten von 0,5 bis 1,0 Mol Chlorwasserstoff, bezogen auf restliche Aminäquivalente des Filtrats, vervollständigt.

Der Amingehalt des Hydrolysats bzw. der Filtrate kann in beliebiger Weise, z.B. titrimetrisch, bestimmt werden. Verfahrensschritt a) empfiehlt sich insbesondere bei Hydrolysaten, welche durch Füllstoffe wie z.B. Pigmente verunreinigt sind. Diese Verunreinigungen werden zusammen mit der geringen Menge an ausgefälltem Diaminomonohydrochlorid entfernt.

Im allgemeinen ist bereits nach dem zweiten erfindungsgemäßen Fällungsschritt der Amingehalt im Filtrat unter die Grenze von 1 Gew.-% (bezogen auf lösungsmittelfreies Filtrat), vorzugsweise unter 0,5 Gew.-%, gesunken. Falls jedoch jeweils eine Chlorwasserstoffmenge an der unteren Grenze des einzuhaltenden Bereichs (ca. 0,2 Mol pro Aminäquivalent) eingeleitet wird, dann können auch mehr als 2 Fällungen erforderlich sein.

Der Chlorwasserstoff kann prinzipiell direkt in das Rohhydrolysat eingeleitet werden; vorteilhafter ist jedoch eine vorherige Verdünnung des Hydrolysats mit einer etwa gewichtsgleichen Menge eines inerten, organischen Lösungsmittels, z.B. Petroläther, Cyclohexan, Methylenchlorid, Benzol, Toluol, Xylol, Chlorbenzol usw. Ein besonders geeignetes Verdünnungsmittel ist Toluol. Die Arbeitstemperatur kann praktisch beliebig zwischen Raumtemperatur und Siedepunkt des Verdünnungsmittels gewählt werden. Besonders bevorzugt ist ein Arbeitsbereich zwischen 70 und 90°C, weil dann das ausgefällte Aminsalz am leichtesten filtrierbar ist.

Das erfindungsgemäße Verfahren eignet sich zur Aufarbeitung von Hydrolysaten beliebiger Polyurethanabfälle. Bevorzugt sind jedoch Hydrolysate von in an sich bekannter Weise (aus Polyisocyanat, Polyätherpolyol, Treibmittel, Katalysatoren und gegebenenfalls weiteren Zusatzstoffen) hergestellten handelsüblichen Polyätherurethan-Schaumstoffen. Die Hydrolysate werden aus dem Polyurethankunststoff in an sich bekannter Weise durch Einwirkung von heißem Wasser bzw. Wasserdampf, vorzugsweise unter Druck, erhalten. Bevorzugt bedient man sich dabei einer kontinuierlich arbeitenden Schneckenmaschine, wie sie z.B. in DE—A 24 42 387 (US—A 4 051 212) beschrieben wird.

Die erfindungsgemäß erhaltenen Regeneratpolyole können ohne weitere Reinigungsschritte direkt wider bei der Herstellung von Polyurethanen, insbesondere Polyätherurethan-Weichschaumstoffen, zusammen mit den üblichen, an sich bekannten Ausgangsstoffen, eingesetzt werden. Die Polyamine können aus dem Aminsalz in an sich bekannter Weise durch Behandeln mit starken Basen (z.B. Calciumhydroxid) freigesetzt und z.B. wieder zu Polyisocyanaten phosgeniert werden.

Die nachfolgenden Beispiele dienen der näheren Erläuterung des Verfahrens. Mengenangaben sind, wenn nicht anders vermekt, als Gewichtsteile bzw. Gewichtsprozente zu verstehen. Den Beispielen liegen nach der Lehre der DE—A 2 442 387 gewonnene Hydrolysate handelsüblicher Blockweichschäume auf Basis eine Polyätherpolyols mit einem mittleren Molekulargewicht von 3200, welches durch Anlagerung von Äthylenoxid/Propylenoxid (10:90) an ein Gemisch von Trimethylolpropan und Propylenglykol (85:15) erhalten wurde, und Toluylendiisocyanat gemäß folgender Rezeptur zugrunde:

100,0 Teile Polyätherpolyol
36,3 Teile T 80 (Toluylendiisocyanat mit 80%, 2,4- und 20% 2,6- Isomeren

2,7 Teile Wasser
0,6 Teile eines Polyäthersiloxans (Stabilisator OS 25 der Bayer AG)
0,06 Teile permethyliertes N-2-Aminoäthylpiperazin
0,18 Teile Sn-Octoat
0,04 Teile Dimethylaminoäthanol

Beispiele 1 a—d (Vergleichsversuche)
a—c) Aminfällungen

Jeweils 400 Teile Rohhydrolysat mit einem Amingehalt von 5,2 Gew.-% $NH_2$ (bestimmt durch Perchlorsäuretitration) wurden jeweils mit 400 Teilen Toluol versetzt und durch 30-minütiges Erhitzen an einem Azeotropabscheider nachentwässert. Anschließend wurde (a) bei Raumtemperatur, (b) bei 50°C und (c) bei 80°C bis zur vollständigen Aminsalzfällung Salzsäuregas eingeleitet. Fällung (a) war sehr feindispers und nicht filtrierbar, Fällung (b) war mitteldispers und erforderte lange Filtrierzeiten, während Fällung (c) im wesentlichen grobkristallin war, mit nur wenig, gegen Ende der Fällung enstandenem feindispersen Anteil, und mühelos filtriert werden konnte. Der Filterkuchen (c) wurde mit wenig wasserfreiem Toluol ausgewaschen. Die vereinigten Filtrate wurden sodann am Vakuumverdampfer von Toluol und überschüssigem Chlorwasserstoff befreit.

Es wurden aus dem Versuchsansatz (1c) 129 Teile rohes Aminsalz (theoretische Menge an Dihydrochlorid: 129,9 Teile; theoretische Menge an Monohydrochlorid: 105,6 Teile) und 291 Teile Polyäther (theoretische: 318,7 Teile) isoliert. Da der Polyäther eine sehr hohe Säurezahl von 2,24 aufwies, wurde er mit fester Soda nachbehandelt und zeigte daraufhin folgende Analysendaten:

| | |
|---|---|
| Hydroxyl-Zahl: | 50,9 |
| Säurezahl: | 0,14 |
| $H_2O$ | 0,07% |
| $NH_2$ | 0,49% |
| pH | 9,2 |

d) Verwendung eines Regeneratpolyäthers nach Vergleichsbeispiel 1c)

100,0 Teile Regeneratpolyäther aus Beispiel (1c)
100,0 Teile des reinen Ausgangspolyäthers
6,0 Teile Wasser
2,0 Teile Stabilisator OS 25
0,3 Teile permethyliertes N-2-Aminoäthylpiperazin
0,2 Teile Dimethylaminoäthanol
0,4 Teile Sn-Octoat und
79,0 Teile T 80

wurden mit einem Schnellrührer vermischt und nach 7 Sekunden Rührzeit in eine Pappform von 20×20 cm ausgegossen. Es entstand ein sehr unregelmäßiger Schaum, der bereits beim Aufsteigen stellenweise "durchblies" und nach einer Steigzeit von 98 Sekunden völlig in sich zusammenfiel.

Beispiel 2 (Vergleichsversuch)

Es wurde analog dem Beispiel (1c) verfahren, jedoch wurden kontrolliert 35,6 Teile Chlorwasserstoffgas (15 Äquivalen-%, berechnet auf Monohydrochlorid, bzw. 75 Äquivalent-%, berechnet auf Dihydrochlorid) eingeleitet. Die Einleitung erfolgte in ein geschlossenes Rührgefäß derart, daß der über ein Manometer kontrollierte Innendruck höchstens 1,0 atü betrug; anschließend wurde nachgerührt, bis kein Überdruck mehr vorhanden und das Chlorwasserstoffgas vollständig absorbiert war. Die Aufarbeitung erfolgte wie in Beispiel (1c) und lieferte 112 Teile rohes Aminsalz sowie 303 Teile Polyäther, welcher nach Nachbehandlung mit fester Soda folgende Analysendaten aufwies:

| | |
|---|---|
| Hydroxyl-Zahl: | 49,5 |
| Säurezahl: | 0,11 (ohne Soda-behandlung: 1,40) |
| $H_2O$ | 0,06% |
| $NH_2$ | 0,33% |
| pH | 9,5 |

Eine Verschäumung des Regeneratpolyäthers entsprechend Vergleichsbeispiel 1 d führte zu einem völlig unbrauchbaren Schaumstoff mit unregelmäßiger Porenstruktur, hohem Schrumpf und starker Rißbildung.

Beispiel 3 (erfindungsgemäßes Verfahren)

a) Aufarbeitung des Hydrolysats

In eine wasserfreie Mischung aus 400 Teilen Rohhydrolysat mit einem titrimetrisch bestimmten Amingehalt von 5,2% gemäß Beispiel 1 und 400 Teilen Toluol wurden in einer ersten Stufe bei 80°C kontrolliert 19,0 Teile Chlorwasserstoffgas (80 Äquivalent-%, berechnet auf Monohydrochlorid) eingeleitet. In die nach Abtrennung des Aminsalzes noch einen Amingehalt von 0,58% aufweisende Lösung wurden in zweiter Stufe ebenfalls bei 80°C 4,75 Teile Chlorwasserstoffgas (90 Äquivalent-%, berechnet auf Monohydrochlorid) eingeleitet. Nach erneuter Abtrennung des Aminsalzes wurde schließlich in einem 3. Schritt durch Einleiten von 1,1 Teilen Chlorwasserstoff-gas (150 Äquivalent-%, berechnet auf Monohydrochlorid) in die noch 0,08% $NH_2$ enthaltende Lösung die Fällung vervollständigt. Die abfiltrierten Aminsalzanteile wurden mit wasserfreiem Toluol von anhaftendem Polyäther freigewaschen. Aus den vereinigten toluolischen Lösungen wurden am Vakuumverdampfer 315,4 Teile Polyäther mit folgenden Analysendaten erhalten:

| | |
|---|---|
| Hydroxyl-Zahl: | 48,5 |
| Säure-Zahl: | 0,02 (ohne Soda-behandlung: 0,7) |
| $H_2O$ | 0,1% |
| $NH_2$ | 0,05% |
| pH | 8,2 (ohne Soda-behandlung: 5,0) |

Daneben wurden insgesamt 99 Teil Aminsalz erhalten.

b) Verwendbarkeit des Regeneratpolyäthers

Entsprechend der Rezeptur nach Vergleichsbeispiel 1 d) werden 100 Teile des Regeneratpolyäthers zusammen mit 100 Teilen Augangspolyäther zur Schaumstoffherstellung verwendet: Der Reaktionsansatz wurde mit einem Schnellrührer vermischt und in eine Pappform von 20×20 cm ausgegossen. Es wurde ein einwandfreier Schaum mit gleichmäßiger Zellstruktur erhalten, der im Vergleich zu einem Originalschaum aus reinem Ausgangspolyäther folgende Werte aufwies:

| | Original-Schaum | Regenerat-Schaum |
|---|---|---|
| Start-Zeit (sec) | 9 | 7 |
| Steig-Zeit (sec) | 86 | 83 |
| Abbinde-Zeit (sec) | 28 | 91 |
| Luftdurchlässigkeit (mm Wassersäule) | 150 | 220 |
| Rohditche (kg/m³) nach DIN 53420 | 27 | 27 |
| Zugfestigkeit (KPa) nach DIN 53571 | 110 | 85 |
| Bruchdehnung (%) nach DIN 53571 | 190 | 135 |
| Stauchhärte bei 40% Stauchung (KPa) gemäß DIN 53577 | 4,1 | 3,9 |

c) Verwendbarkeit des Regenerat-Aminsalzes

50 Teile rohes Aminsalz aus Beispiel 3a) und 15 Teile technisches Calciumhydroxid wurden innig miteinander vermischt und bei einem Vakuum von 2 bis 4 Torr und einer allmählich von 140°C auf 265°C steigenden Reaktionstemperatur abgeröstet. Nach beendeter Wasserabspaltung destillierten bei einer Kopftemperatur von 133 bis 137°C 32 Teile Toluylendiamin (83,1% der Theorie, berechnet auf Monohydrochlorid (über, welches gaschromatographisch als Isomerengemisch aus 19% 2,6- und 81% 2,4-Toluylendiamin analysiert wurde, und in glatter Reaktion ohne weitere Reinigung zu Toluylendiisocyanat phosgeniert werden konnte.

## Patentansprüche

1. Verfahren zur Auftrennung von Polyurethanhydrolysaten in für die Herstellung von Polyurethankunststoffen widerverwendbare Polyole bzw. Polyamine durch Einleitung von Chlorwasserstoffgas in das gegebenenfalls mit einem inerten Lösungsmittel verdünnte Hydrolysatgemisch und Abfiltrieren des ausgefällten Aminsalzes, dadurch gekennzeichnet, daß man

a) gegebenenfalls in das Hydrolysat zunächst pro Aminäquivalent 0,02 bis 0,07 Mol an Chlorwasserstoff einleitet, filtriert und den Filterrückstand verwirft, danach

b) in das Filtrat pro noch vorhandenem Aminäquivalent 0,20 bis 0,47 Mol Chlorwasserstoff einleitet, das ausgefällte Aminsalz abfiltriert, dann

c) den Schritt b) ein- oder mehrmals wiederholt, bis der Amingruppengehalt im Filtrat unter 1 Gew.-%, bezogen auf lösungsmittelfreies Filtrat, liegt, und schließlich

d) die Fällung des Amins durch Einleiten von 0,5 bis 1,0 Mol Chlorwasserstoff, bezogen auf restliche Aminäquivalente des Filtrats, Vervollständigt.

2. Verfahren nach Anspruch 1, dadurch gekennzeichnet, daß man in den Schritten b) und c) 0,30 bis 0,45 Mol Chlorwasserstoff, bezogen auf die jeweils vorhandene Menge an Aminäquivalenten im Hydrolysat bzw. Filtrat, einleitet, bis der Amingruppengehalt im Filtrat unter 0,5 Gew.-%, bezogen auf lösungsmittelfreies Filtrat, liegt.

## Revendications

1. Procédé de séparation de produits d'hydrolyse de polyuréthanne en polyols et polyamines réutilisables pour la production de matières plastiques du type polyuréthanne par passage de gaz chlorhydrique dans le mélange de produits d'hydrolyse éventuellement dilué avec un solvant inerte et filtration du sel d'amine précipité, caractérisé en ce que

a) on fait tout d'abord passer éventuellement dans le produit d'hydrolyse, par équivalent d'amine, 0,02 à 0,07 mole de chlorure d'hydrogène, on filtre et on jette le résidu du filtre, puis

b) on fait arriver dans le filtrat, par équivalent d'amine encore présent, 0,20 à 0,47 mole de chlorure d'hydrogène, on sépare par filtration le sel d'amine précipité, puis

c) on répète une ou plusieurs fois l'étape b) jusqu'à ce que la teneur en groupes amine du filtrat soit inférieure à 1% en poids, par rapport au filtrat dépourvu de solvant, et finalement

d) on accomplit la précipitation de l'amine par passagе de 0,5 à 1,0 mole de chlorure d'hydrogène, par rapport aux équivalents d'amine restants du filtrat.

2. Procédé suivant la revendication 1, caractérisé en ce qu'on fait passer, dans les étapes b) et c), 0,30 à 0,45 mole de chlorure d'hydrogène, par rapport à la quantité d'équivalents d'amine présente dans chaque cas dans le produit d'hydrolyse ou le filtrat jusqu'à ce que la teneur en groupes amine du filtrat soit inférieure à 0,5% en poids, par rapport au filtrat dépourvu de solvant.

## Claims

1. A process for the separation of polyurethane hydrolysates into polyamines and polyols which can be used again for the production of polyurethanes, by the introduction of gaseous hydrogen chloride into the hydrolysate mixture which has optionally been diluted with an inert solvent, and removal of the precipitated amine salt by filtration, characterised in that

a) optionally hydrogen chloride is first introduced into the hydrolysate in a quantity of 0.02 to 0.07 mol per amine equivalent, the reaction mixture is filtered and the filter residue is discarded, then

b) 0.20 to 0.47 mol of hydrogen chloride per amine equivalent still present is introduced into the filtrate and the precipitated amine salt is filtered off, then

c) stage b) is repeated one or more times until the amine group content in the filtrate is below 1% by weight, based on the solvent-free filtrate, and finally

d) precipitation of the amine is completed by the introduction of 0.5 to 1.0 mol of hydrogen chloride, based on the amine equivalents remaining in the filtrate.

2. A process according to Claim 1, characterised in that from 0.30 to 0.45 mol of hydrogen chloride, based on the quantity of amine equivalents present in each case in the hydrolysate or filtrate, are introduced at stages b) and c) until the amine group content in the filtrate is below 0.5% by weight, based on the solvent-free filtrate.